# EUROPÄISCHE PATENTANMELDUNG

(11) **EP 1 056 174 A1**
(43) Veröffentlichungstag der Anmeldung: **29.11.2000**
(21) Anmeldenummer: 00104431.2
(22) Anmeldetag: 03.03.2000
(51) Int. Cl.: H02B 11/133

(54) **Elektrische Schaltfeldanordnung zum Einsatz in einer luftisolierten Schaltanlage**

(30) Priorität: 28.05.1999 DE 19924621
(71) Anmelder: ALSTOM Sachsenwerk GmbH, 93055 Regensburg (DE)
(72) Erfinder: Reichl, Erwin, 93105 Tegernheim (DE)
(74) Vertreter: Dreiss, Fuhlendorf, Steimle & Becker

(57) **Zusammenfassung**

Die vorliegende Erfindung betrifft eine elektrische Schaltfeldanordnung (1) zum Einsatz in einer luftisolierten Schaltanlage, mit mindestens einem Leistungsschalter (3), dessen Schalterpole (6) zusammen mit dessen Schaltstrecken (5) zwischen einer Trennstellung und einer Betriebsstellung verschiebbar ausgebildet sind, und dessen mindestens eines Betätigungselement (7) zum Betätigen der Schaltstrecken (5) ortsfest angeordnet ist. Um eine Schaltfeldanordnung (1) zu schaffen, mit einer Verbindung zwischen dem Betätigungselement (7) und den Schaltstrecken (5), die einerseits eine zuverlässige Übertragung der Betätigungsbewegung (9) des Betätigungselements (7) in eine Schaltbewegung (10) der Schaltstrecken (5) und andererseits ein ungehindertes Verschieben der Schaltstrecken (5) relativ zu dem Betätigungselement (7) ermöglicht, schlägt die Erfindung zum einen den Einsatz einer Anlenkstange (8) und zum anderen den Einsatz einer längenvariablen Übertragungswelle (13) zwischen Betätigungselement (7) und Schaltstrecken (5) vor.

## Beschreibung

Die vorliegende Erfindung betrifft eine elektrische Schaltfeldanordnung zum Einsatz in einer luftisolierten Schaltanlage, mit mindestens einem Leistungsschalter, dessen Schalterpole zusammen mit dessen Schaltstrecken zwischen einer Trennstellung und einer Betriebsstellung verschiebbar ausgebildet sind, und dessen mindestens eines Betätigungselement zum Betätigen der Schaltstrecken ortsfest angeordnet ist.

Aus dem Stand der Technik sind luftisolierte Schaltanlagen bekannt, bei denen der gesamte Leistungsschalter innerhalb der Schaltfeldanordnung zwischen der Trennstellung und der Betriebsstellung verschiebbar ausgebildet ist. In der Betriebsstellung stellt der Leistungsschalter eine stromtragfähige Verbindung der Schaltstrecke mit den Kontakten der Sammelschiene und den Kontakten der Schaltelemente der Schaltfeldanordnung her. In der Trennstellung wird eine Trennstrecke zwischen diesen Kontakten hergestellt. Durch Verschieben des Leistungsschalters aus der Betriebsstellung in die Trennstellung kann der Leistungsschalter innerhalb der Schaltfeldanordnung die Aufgabe eines Trennschalters übernehmen. Dadurch kann auf einen Trennschalter in der Schaltfeldanordnung verzichtet werden.

Trennerlose Schaltfeldanordnungen der eingangs genannten Art sind seit kurzem aus dem Stand der Technik, bspw. aus der DE 196 33 522 A1 und der DE 196 33 524 A1 bekannt. Bei diesen Schaltfeldanordnungen werden nur die an der Herstellung der elektrischen Verbindung bzw. der Trennstrecke beteiligten Elemente des Leistungsschalters verschoben, nämlich die Schalterpole und die Schaltstrecken. Die Betätigungselemente zum Betätigen der Schaltstrecken des Leistungsschalters werden dagegen nicht verschoben.

Da in der Trennstellung auf eine Isolationsstrecke zwischen den Schalterpolen und den geerdeten, nicht verschiebbaren Teilen des Leistungsschalters verzichtet werden kann, können derartige Schaltfeldanordnungen wesentlich kleinbauender ausgebildet werden.

Da bei den Schaltfeldanordnungen der eingangs genannten Art die Schaltstrecken relativ zu den ortsfest angeordneten Betätigungselementen verschiebbar ausgebildet sind, muß eine geeignete Verbindung zwischen den Betätigungselementen und den Schaltstrecken vorgesehen werden. Die Aufgabe der vorliegenden Erfindung besteht deshalb darin, eine Schaltfeldanordnung zu schaffen, mit einer Verbindung zwischen dem Betätigungselement und den Schaltstrecken, die einerseits eine zuverlässige Übertragung der Betätigungsbewegung des Betätigungselements in eine Schaltbewegung der Schaltstrecken und andererseits ein ungehindertes Verschieben der Schaltstrecken relativ zu den Betätigungselementen ermöglicht. Darüber hinaus muß die Verbindung einfach ausgebildet sein und zuverlässig arbeiten.

Als eine Lösung dieser Aufgabe schlägt die Erfindung ausgehend von der Schaltfeldanordnung der eingangs genannten Art vor, dass zwischen dem Betätigungselement und den Schaltstrecken mindestens ein längliches Anlenkelement gelenkig gelagert ist, mit dessen erstem Ende das Betätigungselement und mit dessen zweitem Ende die Schaltstrecken derart in Verbindung stehen, daß eine Betätigungsbewegung des Betätigungselements durch das Anlenkelement in eine Schaltbewegung der Schaltstrecken übertragen wird, wobei das Anlenkelement durch Verschieben der Schalterpole zusammen mit den Schaltstrecken zwischen der Trennstellung und der Betriebsstellung ein gleichschenkliges Dreieck überstreicht, an dessen Spitze die Verbindung zwischen dem Anlenkelement und dem Betätigungselement angeordnet ist.

Bei der erfindungsgemäßen Schaltfeldanordnung kann eine derart ausgebildete Verbindung verschieden ausgestaltet sein. Es ist denkbar, für alle Schaltstrecken lediglich ein gemeinsames Betätigungselement einzusetzen. Die Betätigungsbewegung des Betätigungselements kann in diesem Fall in eine für alle Schaltstrecken gemeinsame Schaltbewegung umgewandelt werden. Dazu kann für alle Schaltstrecken ein gemeinsames Anlenkelement oder für jede Schaltstrecke ein eigenes Anlenkelement eingesetzt werden. Des weiteren ist es denkbar, für jede der Schaltstrecken ein eigenes Betätigungselement vorzusehen. Jeweils zwischen einem der Betätigungselemente und der zugeordneten Schaltstrecke ist ein Anlenkelement angeordnet, das die Betätigungsbewegung in die Schaltbewegungen umwandelt.

Die Betätigungsbewegung kann bspw. als eine Drehbewegung oder als eine lineare Bewegung ausgebildet sein. Die Schaltbewegung der Schaltstrecken kann ebenfalls als eine Drehbewegung oder als eine lineare Bewegung ausgebildet sein. Eine als Drehbewegung ausgebildete Betätigungsbewegung wird z.B. über einen Hebelarm in eine Längsbewegung des Anlenkelements umgelenkt. Die Längsbewegung des Anlenkelements kann dann bspw. in eine lineare Schaltbewegung übertragen werden.

Die Verbindung zwischen dem Anlenkelement und dem Betätigungselement ist an der Spitze eines imaginären gleichschenkligen Dreiecks angeordnet, das von dem Anlenkelement überstrichen wird, wenn die Schalterpole zusammen mit den Schaltstrecken zwischen der Trennstellung und der Betriebsstellung verschoben werden. Durch Ausnutzung der geometrischen Verhältnisse eines gleichschenkligen Dreiecks bleiben die Stellungen der Schaltstrecken beim Übergang von der Betriebsstellung in die Trennstellung und umgekehrt erhalten. So bleibt bspw. die in der Betriebsstellung herbeigeführte AUS-Stellung der Schaltstrecken auch in der Trennstellung erhalten.

Auf dem Verschiebeweg zwischen der Trennstellung und der Betriebsstellung werden die Schaltkontakte im Inneren der Schaltstrecken zur Mittelstellung (zwischen der Trennstellung und der Betriebsstellung) hin einander etwas angenähert. Da das Verschieben der Schalterpole zusammen mit den Schaltstrecken aus schaltungstechnischen Gründen aber immer nur bei geöffneter Schaltstrecke erfolgen darf, d. h. nach der galvanischen Trennung der Schalterpole von den Kontakten der Sammelschiene und den Kontakten der Schaltelemente der Schaltfeldanordnung, ist eine geringfügige Annäherung der Schaltkontakte der Schaltstrecken völlig unkritisch. Die Annäherung ist umso geringer, je länger das Anlenkelement ausgebildet ist und je kleiner der Verschiebeweg zwischen der Trennstellung und der Betriebsstellung ist.

Gemäß einer vorteilhaften Weiterbildung der Erfindung wird vorgeschlagen, dass zwischen dem Anlenkelement und den Schaltstrecken ein Hebelelement angeordnet ist, das zusammen mit den Schalterpolen und den Schaltstrecken verschiebbar ist, an dessen erstem Hebelarm das Anlenkelement angelenkt ist und an dessen zweitem Hebelarm die Schaltstrecken angelenkt sind. Auch bei der Schaltfeldanordnung gemäß dieser Weiterbildung spannt das Anlenkelement beim Verschieben der Schalterpole zusammen mit den Schaltstrecken zwischen der Trennstellung und der Betriebsstellung ein gleichschenkliges Dreieck auf. In der Spitze des Dreiecks ist die Verbindung zwischen dem Anlenkelement und dem Betätigungselement angeordnet. Bei der Weiterbildung kann das Betätigungslement unterhalb der Schalterpole und der Schaltstrecken angeordnet werden. Eine als Drehbewegung ausgebildete Betätigungsbewegung des Betätigungselements wird in eine Längsbewegung des Anlenkelements umgewandelt, die wiederum durch das Hebelelement in eine entgegengesetzt gerichtete lineare Schaltbewegung der Schaltstrecken umgelenkt wird.

Als eine weitere Lösung der Aufgabe schlägt die Erfindung ausgehend von der Schaltfeldanordnung der eingangs genannten Art vor, dass zwischen dem Betätigungselement und den Schaltstrecken mindestens eine längenvariable Übertragungswelle um ihre Längsachse drehbar gelagert ist, mit deren erstem Ende das Betätigungselement und mit deren zweitem Ende die Schaltstrecken derart in Verbindung stehen, daß eine Betätigungsbewegung des Betätigungselements in eine Drehbewegung der Übertragungswelle und diese wiederum in eine Schaltbewegung der Schaltstrecken übertragen wird.

Das erste Ende der Übertragungswelle ist im Bereich der nicht verschiebbaren Teile des Leistungsschalters angeordnet, während das zweite Ende der Übertragungswelle im Bereich der verschiebbaren Teile angeordnet ist. Durch Verschieben der Schalterpole zusammen mit den Schaltstrecken zwischen der Trennstellung und der Betriebsstellung wird die Länge der Übertragungswelle verändert. Die Übertragungswelle ist torsionssteif ausgebildet, so daß mittels der Übertragungswelle Drehmomente von dem Betätigungselement zu den Schaltstrecken übertragen werden können.

Gemäß einer bevorzugten Ausführungsform wird vorgeschlagen, dass ein erstes Stabelement mit seinem ersten Ende an dem Betätigungselement und mit seinem zweiten Ende an das erste Ende der Übertragungswelle derart angelenkt ist, daß eine Drehbewegung des Betätigungselements über das erste Stabelement in die Drehbewegung der Übertragungswelle übertragen wird. Die Drehachse des Betätigungselements kann beliebig zu der Drehachs der Übertragungswelle angeordnet sein. Das erste Stabelement ist wie das Betätigungselement nicht verschiebbar ausgebildet.

Ein zweites Stabelement ist vorzugsweise mit seinem ersten Ende an dem zweiten Ende der Übertragungswelle und mit seinem zweiten Ende an den Schaltstrecken derart angelenkt, dass die Drehbewegung der Übertragungswelle in eine Schaltbewegung übertragen wird. Das zweite Stabelement ist zusammen mit den Schalterpolen und den Schaltstrecken verschiebbar.

Gemäß einer anderen bevorzugten Ausführungsform wird vorgeschlagen, daß für jede Schaltstrecke ein eigenes Betätigungselement mit eigenem ersten Stabelement, eigener Übertragungswelle und eigenem zweiten Stabelement vorgesehen ist. Durch geeignetes Verknüpfen der einzelnen Betätigungselemente untereinander und der Betätigungselemente mit den Schaltstrecken kann erreicht werden, daß die Betätigungselemente redundant ausgebildet sind, und beim Ausfall eines der Betätigungselemente die funktionierenden Betätigungselemente die Aufgabe des ausgefallenen Betätigungselements übernehmen können.

Alternativ wird vorgeschlagen, dass für alle Schaltstrecken eines Leistungsschalters ein gemeinsames Betätigungselement mit gemeinsamem ersten Stabelement und gemeinsamer Übertragungswelle vorgesehen ist. Diese Ausführungsform ist einfach ausgebildet und kann mit wenigen Teilen realisiert werden. Die Drehbewegung der Übertragungswelle muß durch eine geeignete Übertragungsvorrichtung auf sämtliche Schaltstrecken des Leistungsschalters übertragen werden.

Die Übertragungsvorrichtung kann verschieden ausgebildet sein. Gemäß einer bevorzugten Ausführungsform wird vorgeschlagen, dass zwischen der Übertragungswelle und den Schaltstrecken ein längliches axial verschiebbares Verteilerelement angeordnet ist, wobei die Drehbewegung der Übertragungswelle in eine Längsbewegung des Verteilerelements übertragen wird, die wiederum in die Schaltbewegung der Schaltstrecken übertragen wird.

Die Längsbewegung des Verteilerelements kann vorteilhafterweise dadurch auf die Schaltstrecken übertragen werden, dass zwischen dem Verteilerelement und den Schaltstrecken Hebelelemente angeordnet sind, deren erster Hebelarm an dem Verteilerelement und deren zweiter Hebelarm an einer der Schaltstrecken angelenkt ist. Die Drehachsen der Hebelelemente verlaufen vorzugsweise in einem rechten Winkel zu der Bewegungsrichtung des Verteilerelements. Zwischen den zweiten Hebelarmen der Hebelelemente und den Schaltstrecken können die zweiten Stabelemente angeordnet sein.

Alternativ kann die Längsbewegung des Verteilerelements dadurch auf die Schaltstrecken übertragen werden, dass das Verteilerelement in einer Ebene, die durch die Längsbewegung des Verteilerelements und der linearen Schaltbewegung der Schaltstrecken aufgespannt wird, schräg verlaufende Führungsrillen aufweist, in denen die ersten Enden der zweiten Stabelemente verschiebbar aufgenommen sind. Die zweiten Enden der zweiten Stabelemente sind an die Schaltstrecken angelenkt. Bei einer Längsbewegung des Verteilerelements gleiten die ersten Enden der zweiten Stabelemente entlang der Führungsrillen. Aufgrund des schrägen Verlaufs der Führungsrillen führt die Längsbewegung des Verteilerelements zu einer Längsbewegung der zweiten Stabelemente, die als lineare Schaltbewegung auf die Schaltstrecken übertragen wird.

Gemäß einer weiteren bevorzugten Ausführungsform der vorliegenden Erfindung wird vorgeschlagen, dass zwischen der Übertragungswelle und den Schaltstrecken eine um ihre Längsachse drehbare Verteilerwelle angeordnet ist, wobei auf der Übertragungswelle ein erstes Kegelrad drehtest angeordnet ist, das mit einem zweiten Kegelrad, das auf der Verteilerwelle drehtest angeordnet ist, derart in Eingriff steht, dass die Drehbewegung der Übertragungswelle über die Kegelräder in eine Drehbewegung der Verteilerwelle übertragen wird, die wiederum in die Schaltbewegung der Schaltstrecken übertragen wird. Vorzugsweise verlaufen die Längsachsen der Übertragungswelle und der Verteilerwelle in einem rechten Winkel zueinander. Zwischen der Verteilerwelle und den Schaltstrecken können die zweiten Stabelemente angeordnet sein. Die zweiten Stabelemente sind mit ihrem ersten Ende in einem Abstand von der Längsachse der Verteilerwelle an dieser angelenkt. Mit ihrem zweiten Ende sind sie an den Schaltstrecken angelenkt. Die Bewegungsrichtung der zweiten Stabelemente verläuft im wesentlichen in einem rechten Winkel zu der Längsachse der Verteilerwelle.

Die längenvariable Übertragungswelle ist vorteilhafterweise als eine teleskopartig ausfahrbare Welle ausgebildet. Die einzelnen Teleskopteile sind drehfest und axial verschiebbar miteinander verbunden. Vorzugsweise weist die Übertragungswelle zwei Teleskopteile auf, wobei das erste Teleskopteil mit dem nicht verschiebbaren Teil des Leistungsschalters und das zweite Teleskopteil mit dem verschiebbaren Teil des Leistungsschalters verbunden ist.

Gemäß einer anderen vorteilhaften Weiterbildung der vorliegenden Erfindung wird vorgeschlagen, dass zwischen dem zweiten Ende der Übertragungswelle und den Schaltstrecken eine Entlastungsvorrichtung vorgesehen ist, die verhindert, daß bei geöffneten Schaltstrecken Kräfte oder Drehmomente auf die Übertragungswelle wirken. Bei geöffneten Schaltstrecken sind die Schalterpole galvanisch getrennt von den Kontakten der Sammelschiene und den Kontakten der Schaltelemente der Schaltfeldanordnung. Durch die Entlastungsvorrichtung kann ein leichtgängiges Verschieben der Schalterpole zusammen mit den Schaltstrecken erreicht werden, da die Reibung zwischen dem ersten und zweiten Ende der Übertragungswelle reduziert wird. Dieser Vorteil kommt insbesondere bei einer teleskopartig ausfahrbaren Übertragungswelle zum Tragen. Die Entlastungsvorrichtung kann bspw. als Ausgleichsfedern oder als eine Endpunktlagerung in einer Führungsrille des Verteilerelements ausgebildet sein.

Im Folgenden werden anhand der Zeichnungen sechs bevorzugte Ausführungsbeispiele der Erfindung näher erläutert. Es zeigen:
- Fig. 1: eine erfindungsgemäße Schaltfeldanordnung in einer Betriebsstellung und in einer Trennstellung;
- Fig. 2: einen Leistungsschalter der erfindungsgemäßen Schaltfeldanordnung in einer ersten Ausführungsform in einer Betriebsstellung und in einer Trennstellung;
- Fig. 3: einen Leistungsschalter der erfindungsgemäßen Schaltfeldanordnung in einer zweiten Ausführungsform in einer Betriebsstellung und in einer Trennstellung;
- Fig. 4a, 4b, 4c: einen Leistungsschalter der erfindungsgemäßen Schaltfeldanordnung in einer dritten Ausführungsform in einer Betriebsstellung, in einer Trennstellung und in einer Ansicht von vorne;
- Fig. 5a, 5b, 5c: einen Leistungsschalter der erfindungsgemäßen Schaltfeldanordnung in einer vierten Ausführungsform in einer Betriebsstellung, in einer Trennstellung und in einer Ansicht von vorne;
- Fig. 6a, 6b, 6c: einen Leistungsschalter der erfindungsgemäßen Schaltfeldanordnung in einer fünften Ausführungsform in einer Betriebsstellung, in einer Trennstellung und in einer Ansicht von vorne;
- Fig. 7a, 7b, 7c: einen Leistungsschalter der erfindungsgemäßen Schaltfeldanordnung in einer sechsten Ausführungsform in einer Betriebsstellung, in einer Trennstellung und in einer Ansicht von vorne;

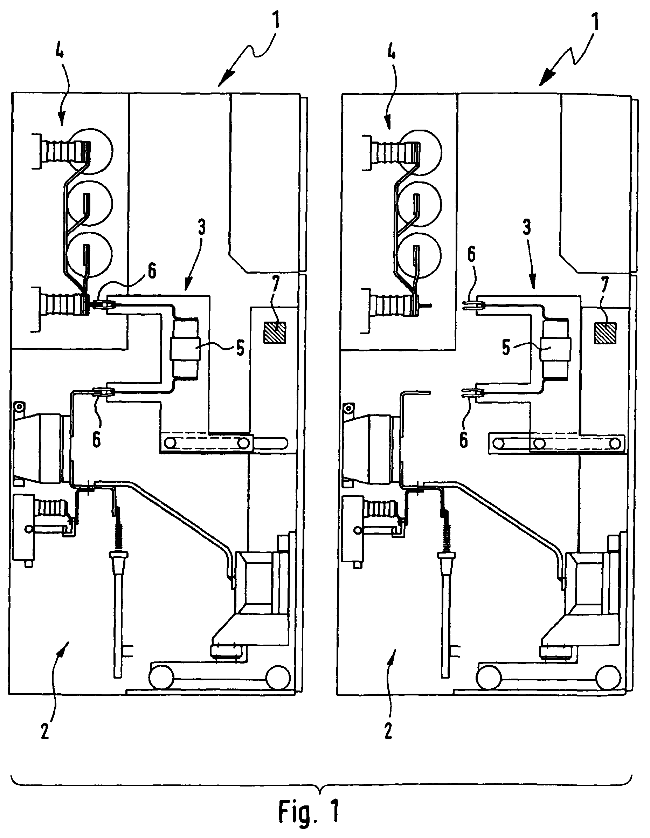

In Fig. 1 ist eine erfindungsgemäße elektrische Schaltfeldanordnung zum Einsatz in einer luftisolierten Schaltanlage in ihrer Gesamtheit mit dem Bezugszeichen 1 gekennzeichnet. Die Schaltfeldanordnung 1 weist elektrische Schaltelemente 2 auf, die mittels eines Leistungsschalters 3 mit einer Sammelschiene 4 elektrisch leitend verbindbar sind. Die Sammelschiene 4 weist drei übereinander angeordnete, in die Zeichenebene hinein verlaufende Leitungen auf, nämlich für jede Phase der in der Schaltanlage zu schaltende Spannung eine eigene Leitung. Der Leistungsschalter 4 weist drei in der Zeichenebene hintereinander angeordnete Schaltstrecken 5 auf, nämlich für jede Phase der in der Schaltanlage zu schaltende Spannung eine eigene Schaltstrecke 5. Die Schaltstrecken 5 stellen in einer EIN-Stellung die elektrisch leitende Verbindung zwischen den Schaltelementen 2 und der Sammelschiene 4 her und unterbrechen in einer AUS-Stellung diese Verbindung.

Der Leistungsschalter 3 weist außerdem Schalterpole 6 auf, die über entsprechende Kontakte mit den Schaltelementen 2 bzw. mit der Sammelschiene 4 elektrisch leitend in Verbindung stehen. Die Schalterpole 6 und die Schaltstrecken 5 des Leitungsschalters 3 sind zwischen einer Betriebsstellung (linker Teil der Fig. 1) und einer Trennstellung (rechter Teil der Fig. 1) horizontal verschiebbar ausgebildet. Durch das Verschieben des Leistungsschalters 3 wird in der Betriebsstellung eine stromtragfähige Verbindung der Schaltstrecke 5 mit den Kontakten der Sammelschiene 4 und denen der Schaltfeldkomponenten 2 und in der Trennstellung eine Trennstrecke zwischen diesen Kontakten hergestellt.

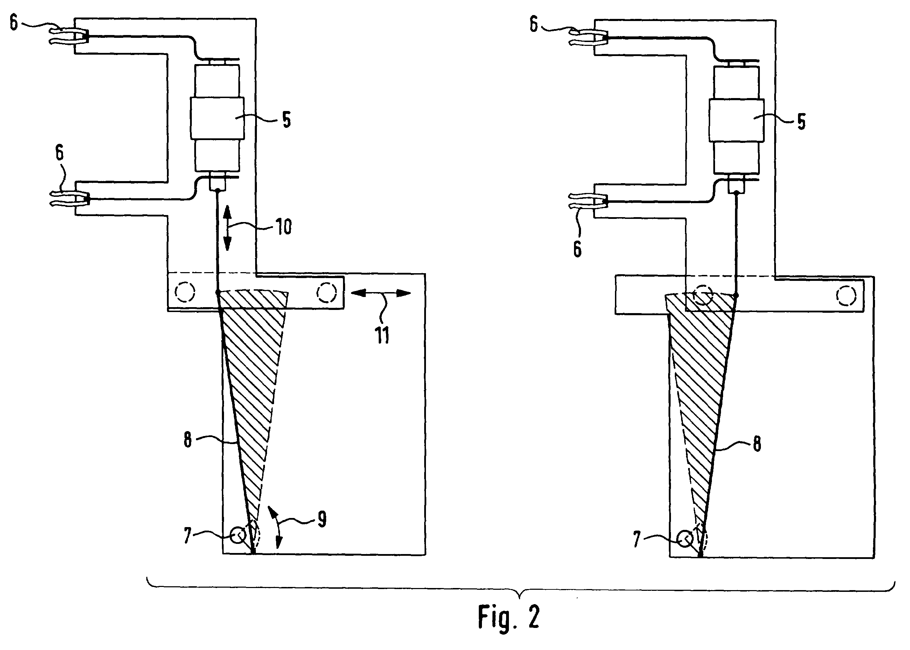

Der nicht verschiebbare ortsfeste Teil des Leistungsschalters 3 umfaßt Mittel zum Verschieben der Schalterpole 6 und der Schaltstrecken 5. Außerdem ist ein Betätigungselement 7 zum Betätigen der Schaltstrecken 5 ortsfest in dem Leistungsschalter 3 angeordnet. Da bei der Schaltfeldanordnung 1 die Schaltstrecken 5 relativ zu dem ortsfest angeordneten Betätigungselement 7 verschiebbar ausgebildet sind, muss eine geeignete Verbindung zwischen dem Betätigungselement 7 und den Schaltstrecken 5 vorgesehen werden. Die Erfindung schlägt mehrere Ausführungsformen der Schaltfeldanordnung 1 vor, bei der die Verbindung zwischen dem Betätigungselement 7 und den Schaltstrecken 5 einerseits eine zuverlässige Übertragung der Betätigungsbewegung des Betätigungselements 7 in eine Schaltbewegung der Schaltstrecken 5 und andererseits ein ungehindertes Verschieben der Schaltstrecken 5 relativ zu dem Betätigungselement 7 ermöglicht. Diese Verbindungen werden nachfolgend anhand der Fig. 2 bis 7 näher erläutert.

In Fig. 2 ist der Leistungsschalter 3 aus Fig. 1 in einer ersten Ausführungsform dargestellt. In dem linken Teil von Fig. 2 ist der Leistungsschalter 3 in der Betriebsstellung und im rechten Teil der Fig. 2 in der Trennstellung dargestellt. Zwischen dem Betätigungselement 7 und den Schaltstrecken 5 ist ein längliches Anlenkelement 8 gelenkig gelagert. Das Anlenkelement 8 steht mit seinem ersten Ende mit dem Betätigungselement 7 und mit seinem zweiten Ende mit den Schaltstrecken 5 derart in Verbindung, dass eine Betätigungsbewegung des Betätigungselements 7 durch das Anlenkelement 8 in eine Schaltbewegung 10 der Schaltstrecken 5 übertragen wird. Das Anlenkelement 8 überstreicht beim Verschieben der Schalterpole 6 zusammen mit den Schaltstrecken 5 zwischen der Betriebsstellung (linker Teil von Fig. 2) und der Trennstellung (rechter Teil der Fig. 2) ein gleichschenkliges Dreieck, an dessen Spitze das Betätigungselement 7 angeordnet ist. Genauer gesagt ist an der Spitze des gleichschenkligen Dreiecks der Punkt angeordnet, an dem das Anlenkelement 8 mit seinem ersten Ende an dem Betätigungselement 7 angelenkt ist.

Bei dem in Fig. 2 dargestellten Leistungsschalter 3 wird eine als Drehbewegung ausgebildete Betätigungsbewegung 9 des Betätigungselements 7 in eine lineare Schaltbewegung 10 der Schaltstrecken 5 mittels des Anlenkelementes 8 umgelenkt. Durch die Ausnutzung der geometrischen Verhältnisse in einem gleichschenkligen Dreieck bleiben die Schaltstellungen der Schaltstrecken 5 (AUS- bzw. EIN-Stellung) in der Betriebsstellung und in der Trennstellung erhalten.

Auf dem Verschiebeweg 11 zwischen der Betriebsstellung und der Trennstellung werden die Schaltkontakte (nicht dargestellt) im Inneren der Schaltstrecken 5 zur Mittelstellung (zwischen Betriebsstellung und Trennstellung) hin einander etwas angenähert. Da das Verschieben der Schalterpole 6 zusammen mit den Schaltstrecken 5 aus schaltungstechnischen Gründen nur in der AUS-Stellung der Schaltstrecken 5 erfolgen darf, d. h. nach einer galvanischen Trennung der Schalterpole 6 von den Kontakten der Sammelschiene 4 und denen der Schaltfeldkomponenten 2, ist eine geringfügige Annäherung der Schaltkontakte der Schaltstrecken 5 völlig unkritisch. Die Annäherung ist umso geringer, je länger das Anlenkelement 8 ausgebildet ist und je kleiner der Verschiebeweg 11 zwischen der Betriebsstellung und der Trennstellung ist.

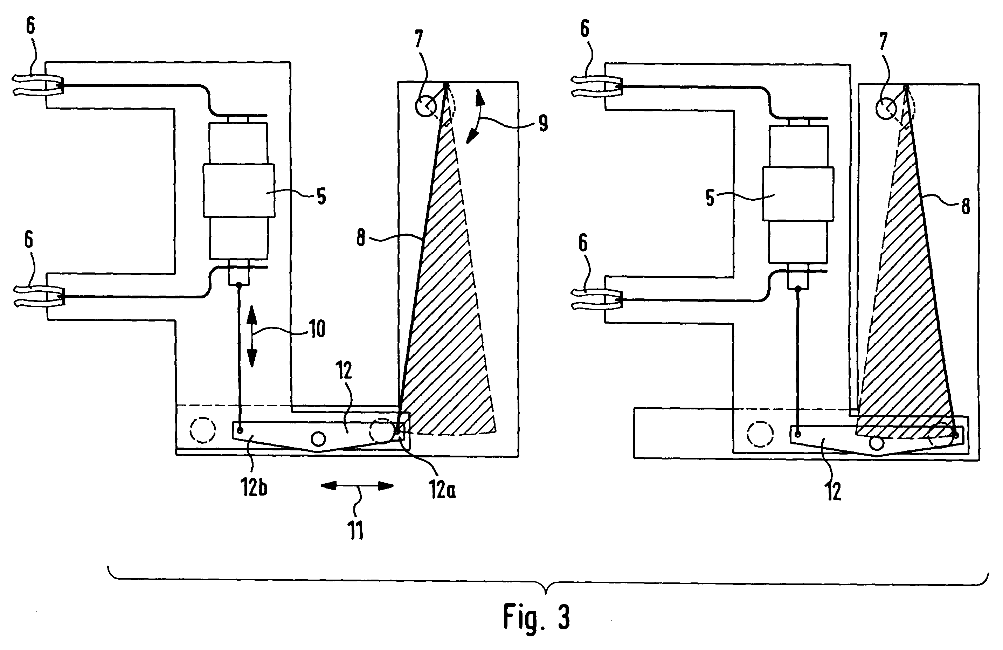

Bei dem in Fig. 3 dargestellten Leistungsschalter 3 ist zwischen dem Anlenkelement 8 und den Schaltstrecken 5 ein Hebelelement 12 angeordnet. Das Hebelelement 12 ist zusammen mit den Schalterpolen 6 und den Schaltstrecken 5 verschiebbar. An dem ersten Hebelarm 12a ist das Anlenkelement 8 angelenkt, und an dem zweiten Hebelarm 12b sind die Schaltstrecken 5 angelenkt. Auch bei der Schaltfeldanordnung 1 gemäß dieses Ausführungsbeispiels überstreicht das Anlenkelement 8 beim Verschieben der Schalterpole 6 zusammen mit den Schaltstrecken 5 zwischen der Betriebsstellung und der Trennstellung ein gleichschenkliges Dreieck, in dessen Spitze der Punkt angeordnet ist, an dem das Anlenkelement 8 mit seinem ersten Ende an dem Betätigungselement 7 angelenkt ist. Bei diesem Ausführungsbeispiel kann das Betätigungselement 7 neben den Schalterpolen 6 und den Schaltstrecken 5 angeordnet werden.

Eine als Drehbewegung ausgebildete Betätigungsbewegung 9 des Betätigungselements 7 wird in eine Längsbewegung des Anlenkelements 8 umgelenkt. Diese Längsbewegung wird durch das Hebelelement 12 in eine entgegengesetzt gerichtete lineare Schaltbewegung 10 der Schaltstrecken 5 umgelenkt.

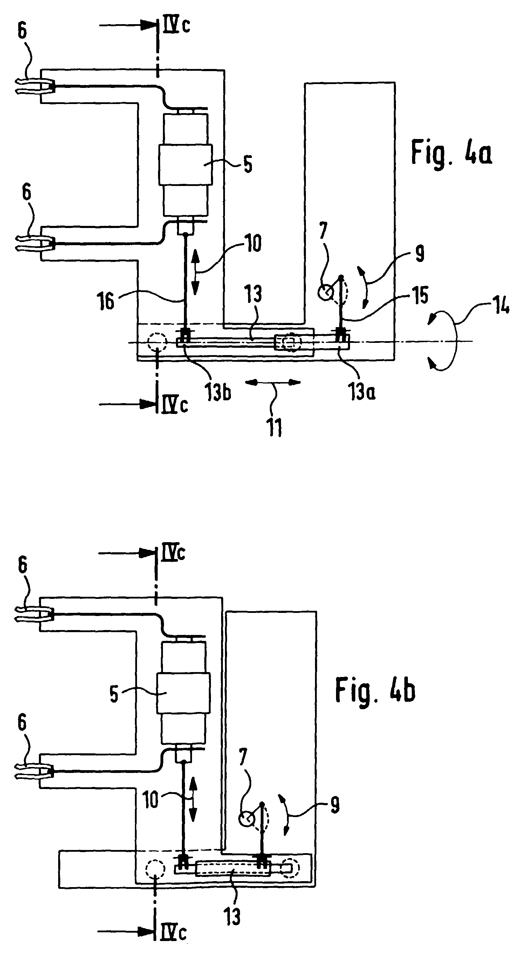

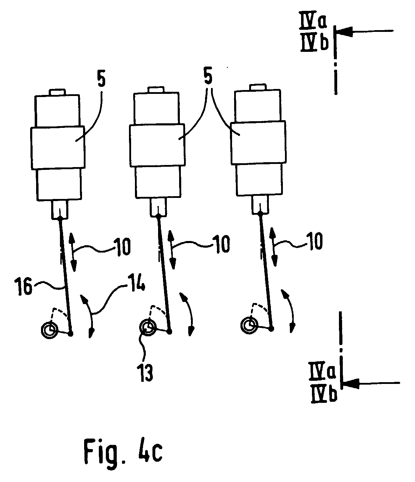

In den Fig. 4a bis 4c ist ein Leistungsschalter 3 gemäß einer dritten Ausführungsform dargestellt. Bei dem Leistungsschalter 3 aus den Fig. 4a bis 4c ist zwischen dem Betätigungselement 7 und jeder der Schaltstrecken 5 eine längenvariable Übertragungswelle 13 um ihre Längsachse drehbar gelagert. Die Übertragungswellen 13 stehen mit ihren ersten Enden mit dem Betätigungselement 7 und mit ihren zweiten Enden jeweils mit einer der Schaltstrecken 5 derart in Verbindung, dass eine Betätigungsbewegung 9 des Betätigungselements 7 in eine Drehbewegung 14 der Übertragungswellen 13 und diese wiederum in eine lineare Schaltbewegung 10 der Schaltstrecken 5 übertragen wird.

Die Übertragungswelle 13 ist als eine zweiteilige, teleskopartig ausfahrbare Welle ausgebildet. Das erste Teleskopteil 13a der Übertragungswelle 13 steht mit dem Betätigungselement 7 in Verbindung. Ebenso wie das Betätigungselement 7 ist auch das erste Teleskopteil 13a ortsfest in dem Leistungsschalter 3 angeordnet. Das relativ zu dem ersten Teleskopteil 13a axial verschiebbare zweite Teleskopteil 13b steht mit einer der Schaltstrecken 5 in Verbindung. Die Übertragungswelle 13 ist torsionssteif ausgebildet, so dass auf das erste Teleskopteil 13a wirkende Drehmomente auf das zweite Teleskopteil 13b übertragen werden können.

An dem Betätigungselement 7 ist ein erstes Stabelement 15 mit seinem ersten Ende angelenkt. Mit seinem zweiten Ende ist das erste Stabelement 15 an das erste Teleskopteil 13a der Übertragungswelle 13 angelenkt. Eine Betätigungsbewegung 9 des Betätigungselements 7 wird über das erste Stabelement 15 in die Drehbewegung 14 der Übertragungswelle 13 übertragen. An dem zweiten Teleskopteil 13b ist für jede der Schaltstrecken 5 ein zweites Stabelement 16 mit seinem ersten Ende angelenkt. Mit seinem zweiten Ende ist das zweite Stabelement 16 an einer der Schaltstrecken 5 angelenkt. Die Drehbewegung 14 der Übertragungswelle 13 wird in eine lineare Schaltbewegung 10 übertragen. Bei dem Ausführungsbeispiel gemäß den Fig. 4a bis 4c ist für jede der Schaltstrecken 5 eine eigene Übertragungswelle 13 und ein eigenes zweites Stabelement 16 vorgesehen. Die Übertragungswellen 13 können von einem oder mehreren Betätigungselementen 7 über ein oder mehrere erste Stabelemente 15 betätigt werden.

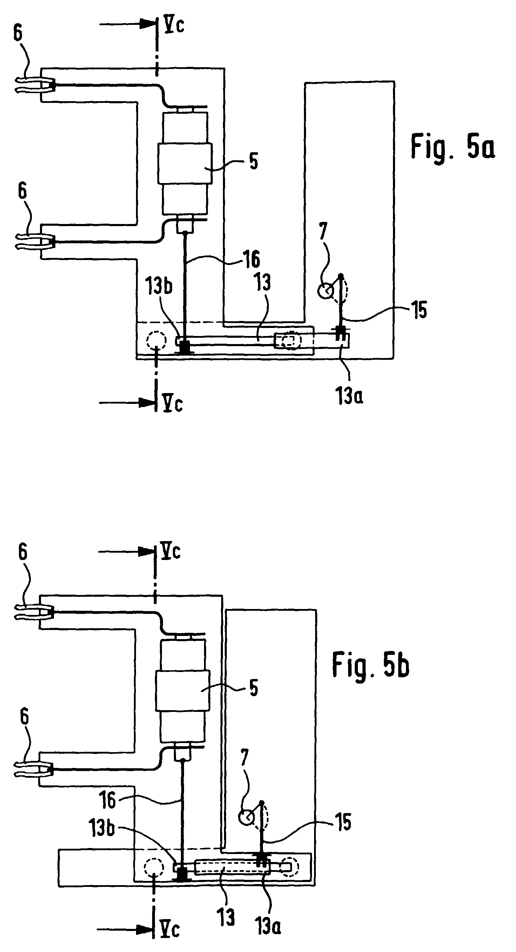

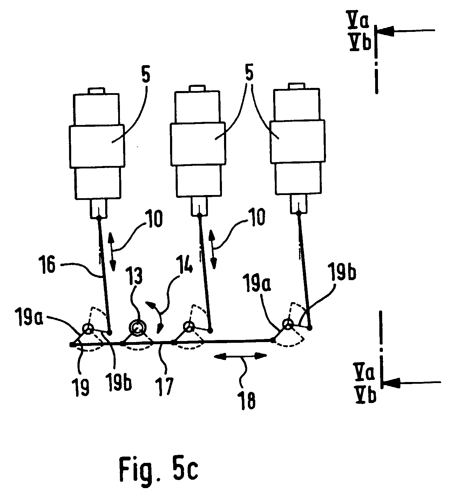

In den Fig. 5a bis 5c ist ein Leistungsschalter 3 in einer vierten Ausführungsform dargestellt, bei der für alle Schaltstrecken 5 eine gemeinsame Übertragungswelle 13 vorgesehen ist. Zwischen der Übertragungswelle 13 und den Schaltstrecken 5 ist ein längliches axial verschiebbares Verteilerelement 17 angeordnet (vgl. Fig. 5c). Die Drehbewegung 14 der Übertragungswelle 13 wird in eine Längsbewegung 18 des Verteilerelements 17 übertragen. Die Längsbewegung 18 wird wiederum in die lineare Schaltbewegung 10 der Schaltstrecken 5 übertragen. Zwischen dem Verteilerelement 17 und den Schaltstrecken 5 sind die zweiten Stabelemente 16 und abgewinkelte Hebelelemente 19 angeordnet, deren erster Hebelarm 19a an dem Verteilerelement 17 angelenkt ist und deren zweiter Hebelarm 19b an den zweiten Stabelementen 16 angelenkt ist.

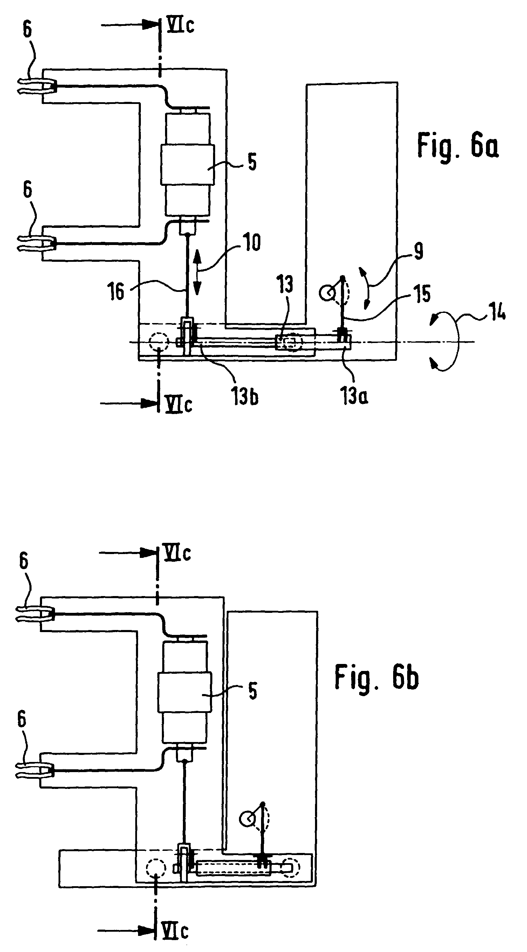

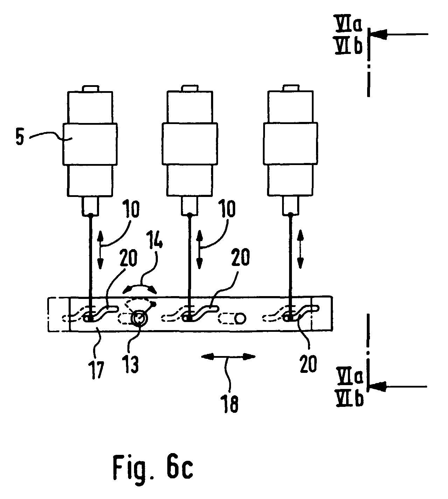

In den Fig. 6a bis 6c ist ein Leistungsschalter 3 der erfindungsgemäßen Schaltfeldanordnung 1 gemäß einer fünften Ausführungsform dargestellt. Ähnlich wie bei der Ausführungsform gemäß den Fig. 5a bis 5c wird auch hier die Betätigungsbewegung 9 des Betätigungselements 7 in eine Drehbewegung 14 der Übertragungswelle 13 umgesetzt. Anders als in der Ausführungsform gemäß Fig. 5a bis 5c weist das Verteilerelement 17 in einer Ebene, die durch die Längsbewegung 18 des Verteilerelements 17 und der Schaltbewegung 10 der Schaltstrecken 5 aufgespannt wird, schräg verlaufende Führungsrillen 20 auf. Die ersten Enden der zweiten Stabelemente 16 werden von den Führungsrillen 20 in diesen verschiebbar aufgenommen. Bei einer Längsbewegung 18 des Verteilerelements 17 gleiten die ersten Enden der zweiten Stabelemente 16 entlang der Führungsrillen 20. Aufgrund des schrägen Verlaufs der Führungsrillen 20 führt die Längsbewegung 18 des Verteilerelements 17 zu einer Längsbewegung der zweiten Stabelemente 16, die als lineare Schaltbewegung 10 auf die Schaltstrecken 5 übertragen wird. Es ist auch denkbar, dass die Führungsrillen 20 derart ausgebildet sind, dass die Längsbewegung 18 des Verteilerelements 17 zu einer Längsbewegung der zweiten Stabelemente 16 führt, die als eine beliebige nichtliniere Schaltbewegung 10 auf die Schaltstrecken 5 übertragen wird. Die in Fig. 6c dargestellten horizontal verlaufenden Bereiche der Führungsrillen 20 bewirken, dass in den beiden Endlagen der Längsbewegung 18 nur vertikal wirkende Kraftkomponenten auf die zweiten Stabelemente 16 wirken und damit kein Verschieben derselben hervorrufen. Damit entsteht auch kein vor- oder rückwärtsdrehendes Moment auf die Übertragungswelle 13, so dass die Reibung zwischen dem Teleskopteil 13a und dem Teleskopteil 13b theoretisch gegen den Wert 0 geht.

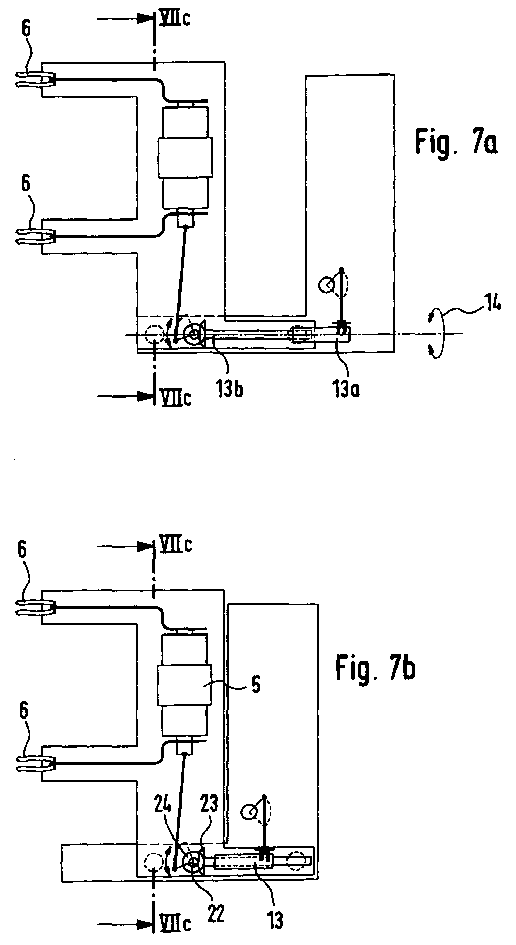

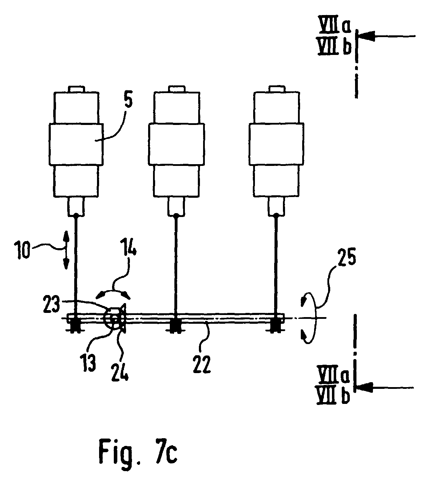

In den Fig. 7a bis 7c ist ein Leistungsschalter 3 einer erfindungsgemäßen Schaltfeldanordnung 1 gemäß einer sechsten Ausführungsform dargestellt. Zwischen der Übertragungswelle 13 und den Schaltstrecken 5 ist eine um ihre Längsachse drehbare Verteilerwelle 22 angeordnet. Auf dem zweiten Teleskopteil 13b der Übertragungswelle 13 ist ein mit dieser drehtest verbundenes erstes Kegelrad 23 befestigt. Auf der Verteilerwelle 22 ist ein mit dieser drehtest verbundenes zweites Kegelrad 24 angeordnet. Die beiden Kegelräder 23, 24 stehen derart miteinander in Eingriff, dass die Drehbewegung 14 der Übertragungsrille 13 über die beiden Kegelräder 23, 24 in eine Drehbewegung 25 der Verteilerwelle 22 übertragen wird. Die Drehbewegung 25 der Verteilerwelle 22 wird wiederum in die lineare Schaltbewegung 10 der Schaltstrecken 5 übertragen.

Zwischen dem zweiten Teleskopteil 13b der Übertragungswelle 13 und den Schaltstrecken 5 ist eine Entlastungsvorrichtung (nicht dargestellt), bspw. in Form einer Ausgleichsfeder, vorgesehen, die verhindert, dass in der AUS-Stellung der Schaltstrecken 5 Kräfte oder Drehmomente auf die Übertragungswelle 13 wirken. Dadurch kann ein leichtgängiges Verschieben der Schalterpole 6 zusammen mit den Schaltstrecken 5 erreicht werden, da die Reibung zwischen dem ersten Teleskopteil 13a und dem zweiten Teleskopteil 13b reduziert wird.

## Patentansprüche

1. Elektrische Schaltfeldanordnung (1) zum Einsatz in einer luftisolierten Schaltanlage, mit mindestens einem Leistungsschalter (3), dessen Schalterpole (6) zusammen mit dessen Schaltstrecken (5) zwischen einer Trennstellung und einer Betriebsstellung verschiebbar ausgebildet sind, und dessen mindestens eines Betätigungselement (7) zum Betätigen der Schaltstrecken (5) ortsfest angeordnet ist, **dadurch gekennzeichnet**, daß zwischen dem Betätigungselement (7) und den Schaltstrecken (5) mindestens ein längliches Anlenkelement (8) gelenkig gelagert ist, mit dessen erstem Ende das Betätigungselement (7) und mit dessen zweitem Ende die Schaltstrecken (5) derart in Verbindung stehen, daß eine Betätigungsbewegung (9) des Betätigungselements (7) durch das Anlenkelement (8) in eine Schaltbewegung (10) der Schaltstrecken (5) übertragen wird, wobei das Anlenkelement (8) durch Verschieben der Schalterpole (6) zusammen mit den Schaltstrecken (5) zwischen der Trennstellung und der Betriebsstellung ein gleichschenkliges Dreieck überstreicht, an dessen Spitze die Verbindung zwischen dem Anlenkelement (8) und dem Betätigungselement (7) angeordnet ist.

2. Schaltfeldanordnung (1) nach Anspruch 1, dadurch gekennzeichnet, daß zwischen dem Anlenkelement (8) und den Schaltstrecken (5) ein Hebelelement (12) angeordnet ist, das zusammen mit den Schalterpolen (6) und den Schaltstrecken (5) verschiebbar ist, an dessen erstem Hebelarm (12a) das Anlenkelement (8) angelenkt ist und an dessen zweitem Hebelarm (12b) die Schaltstrecken (5) angelenkt sind.

3. Elektrische Schaltfeldanordnung (1) zum Einsatz in einer luftisolierten Schaltanlage, mit mindestens einem Leistungsschalter (3), dessen Schalterpole (6) zusammen mit dessen Schaltstrecken (5) zwischen einer Trennstellung und einer Betriebsstellung verschiebbar ausgebildet sind, und dessen mindestens eines Betätigungselement (7) zum Betätigen der Schaltstrecken (5) ortsfest angeordnet ist, **dadurch gekennzeichnet**, daß zwischen dem Betätigungselement (7) und den Schaltstrecken (5) mindestens eine längenvariable Übertragungswelle (13) um ihre Längsachse drehbar gelagert ist, mit deren erstem Ende das Betätigungselement (7) und mit deren zweitem Ende die Schaltstrecken (5) derart in Verbindung stehen, daß eine Betätigungsbewegung (9) des Betätigungselements (7) in eine Drehbewegung (14) der Übertragungswelle (13) und diese wiederum in eine Schaltbewegung (10) der Schaltstrecken (5) übertragen wird.

4. Schaltfeldanordnung (1) nach Anspruch 3, dadurch gekennzeichnet, daß ein erstes Stabelement (15) mit seinem ersten Ende an dem Betätigungselement (7) und mit seinem zweiten Ende an das erste Ende der Übertragungswelle (13) derart angelenkt ist, daß eine Drehbewegung (9) des Betätigungselements (7) über das erste Stabelement (15) in die Drehbewegung (14) der Übertragungswelle (13) übertragen wird.

5. Schaltfeldanordnung (1) nach Anspruch 4, dadurch gekennzeichnet, daß ein zweites Stabelement (16) mit seinem ersten Ende an dem zweiten Ende der Übertragungswelle (13) und mit seinem zweiten Ende an den Schaltstrecken (5) derart angelenkt ist, daß die Drehbewegung (14) der Übertragungswelle (13) in eine Schaltbewegung (10) übertragen wird.

6. Schaltfeldanordnung (1) nach Anspruch 5, dadurch gekennzeichnet, daß für jede Schaltstrecke (5) ein eigenes Betätigungselement (7) mit eigenem ersten Stabelement (15), eigener Übertragungswelle (13) und eigenem zweiten Stabelement (16) vorgesehen ist.

7. Schaltfeldanordnung (1) nach Anspruch 5, dadurch gekennzeichnet, daß für alle Schaltstrecken (5) eines Leistungsschalters (3) ein gemeinsames Betätigungselement (7) mit gemeinsamem ersten Stabelement (15) und gemeinsamer Übertragungswelle (13) vorgesehen ist.

8. Schaltfeldanordnung (1) nach Anspruch 7, dadurch gekennzeichnet, daß zwischen der Übertragungswelle (13) und den Schaltstrecken (5) ein längliches axial verschiebbares Verteilerelement (17) angeordnet ist, wobei die Drehbewegung (14) der Übertragungswelle (13) in eine Längsbewegung (18) des Verteilerelements (17) übertragen wird, die in die Schaltbewegung (10) der Schaltstrecken (5) übertragen wird.

9. Schaltfeldanordnung (1) nach Anspruch 8, dadurch gekennzeichnet, daß zwischen dem Verteilerelement (17) und den Schaltstrecken (5) Hebelelemente (19) angeordnet sind, deren erster Hebelarm (19a) an dem Verteilerelement (17) angelenkt ist und deren zweiter Hebelarm (19b) an einer der Schaltstrecken (5) angelenkt ist.

10. Schaltfeldanordnung (1) nach Anspruch 8, dadurch gekennzeichnet, daß das Verteilerelement (17) in einer Ebene, die durch die Längsbewegung (18) des Verteilerelements (17) und der Schaltbewegung (10) der Schaltstrecken (5) aufgespannt wird, schräg verlaufende Führungsrillen (20) aufweist, in denen die ersten Enden der zweiten Stabelemente (16) verschiebbar aufgenommen sind.

11. Schaltfeldanordnung (1) nach Anspruch 7, dadurch gekennzeichnet, daß zwischen der Übertragungswelle (13) und den Schaltstrecken (5) eine um ihre Längsachse drehbare Verteilerwelle (22) angeordnet ist, wobei auf der Übertragungswelle (13) ein erstes Kegelrad (23) drehfest angeordnet ist, das mit einem zweiten Kegelrad (24), das auf der Verteilerwelle (22) drehfest angeordnet ist, derart in Eingriff steht, dass die Drehbewegung (14) der Übertragungswelle (13) über die Kegelräder (23, 24) in eine Drehbewegung (25) der Verteilerwelle (22) übertragen wird, die wiederum in die Schaltbewegung (10) der Schaltstrecken (5) übertragen wird.

12. Schaltfeldanordnung (1) nach einem der Ansprüche 3 bis 11, dadurch gekennzeichnet, daß die längenvariable Übertragungswelle (13) als eine teleskopartig ausfahrbare Welle ausgebildet ist.

13. Schaltfeldanordnung (1) nach einem der Ansprüche 3 bis 12, dadurch gekennzeichnet, daß zwischen dem zweiten Ende der Übertragungswelle (13) und den Schaltstrecken (5) eine Entlastungsvorrichtung vorgesehen ist, die verhindert, daß bei geöffneten Schaltstrecken (5) Kräfte oder Drehmomente auf die Übertragungswelle (13) wirken.
